# EUROPEAN PATENT APPLICATION

(11) **EP 4 614 160 A1**
(43) Date of publication of application: **10.09.2025**
(21) Application number: 23885410.3
(22) Date of filing: 27.09.2023
(51) Int. Cl.: G01N 35/10

(54) **AUTOMATIC ANALYSIS DEVICE AND SAMPLE-DISPENSING METHOD**

(30) Priority: 31.10.2022 JP 2022174406
(71) Applicant: HITACHI HIGH-TECH CORPORATION, Tokyo 105-6409 (JP)
(72) Inventor: HASEGAWA, Takafumi, Tokyo 105-6409 (JP)
(74) Representative: Strehl & Partner mbB
(86) International application number: PCT/JP2023/035208
(87) International publication number: WO 2024/095646

(57) **Abstract**

To enable accurate and stable dispensing regardless of an amount of a sample accommodated in a sample container at a stage when the sample container is loaded into an automatic analyzer. The automatic analyzer includes a liquid surface height detection device 13 configured to detect a liquid surface height of a sample accommodated in a sample container 11a, a dispensing device 21 configured to dispense the sample by a dispensing probe 42, a liquid surface sensing unit 50 configured to output, based on a change in an electrostatic capacity between the dispensing probe and the sample accommodated in the sample container, a liquid surface sensing signal indicating that the dispensing probe is in contact with the sample, and a dispensing control unit 44 configured to control an operation of the dispensing device. The liquid surface sensing unit includes a liquid surface sensing circuit whose output voltage changes depending on the electrostatic capacity between the dispensing probe and the sample accommodated in the sample container and generates a liquid surface sensing signal for stopping the lowering of the dispensing probe by comparing the output voltage of the liquid surface sensing circuit with a threshold. The threshold is set based on at least the liquid surface height of the sample detected by the liquid surface height detection device.

## Description

### Technical Field

The present invention relates to an automatic analyzer and a liquid dispensing method, and more particularly, to an automatic analyzer and a liquid dispensing method involving processing of performing dispensing for a plurality of items and many times.

### Background Art

In the related art, as an automatic analyzer of a sample such as blood or body fluid, an analysis device that adds a reagent to blood or body fluid and optically detects a reaction occurring between the reagent and the sample has been known. Such an automatic analyzer includes a liquid surface sensing mechanism that senses a liquid surface of a liquid in order to perform accurate dispensing processing of the sample or the reagent.

### Citation List

### Patent Literature

PTL 1: JP2012-37236A

### Summary of Invention

### Technical Problem

PTL 1 discloses that, in a liquid surface sensing mechanism, a threshold voltage for sensing the liquid surface is corrected based on the liquid surface height. However, according to the disclosed correction method, it is assumed that the sample is accommodated in a sample container up to the maximum height.

However, actually, the sample may be loaded into the device in a state in which the sample does not reach the maximum capacity of the sample container. Therefore, when the threshold voltage is calculated on the assumption that the sample is accommodated up to the maximum height of the sample container, it is inevitable that the threshold voltage may deviate from an originally optimum threshold.

The invention has been made in view of the above, and an object thereof is to provide an automatic analyzer and a dispensing method that enable more accurate dispensing of a sample or a reagent.

### Solution to Problem

An automatic analyzer according to an aspect of the invention includes: a liquid surface height detection device configured to detect a liquid surface height of a sample accommodated in a sample container; a dispensing device configured to dispense, by a dispensing probe, the sample accommodated in the sample container; a liquid surface sensing unit configured to output, based on a change in an electrostatic capacity between the dispensing probe and the sample accommodated in the sample container, a liquid surface sensing signal indicating that the dispensing probe is in contact with the sample; and a dispensing control unit configured to control an operation of the dispensing device. The dispensing control unit causes the dispensing device to lower the dispensing probe toward the sample container and to stop the lowering of the dispensing probe when receiving the liquid surface sensing signal from the liquid surface sensing unit. The liquid surface sensing unit includes a liquid surface sensing circuit whose output voltage changes depending on the electrostatic capacity between the dispensing probe and the sample accommodated in the sample container, and generates the liquid surface sensing signal by comparing the output voltage of the liquid surface sensing circuit with a threshold. The dispensing control unit sets the threshold based on at least the liquid surface height of the sample accommodated in the sample container detected by the liquid surface height detection device.

### Advantageous Effects of Invention

It is possible to perform accurate and stable dispensing regardless of an amount of a sample accommodated in a sample container at a stage when the sample container is loaded into an automatic analyzer. Other technical problems and novel features will become apparent from description of the present description and the accompanying drawings.

### Brief Description of Drawings

[FIG. 1] FIG. 1 is a schematic diagram showing a configuration of an automatic analyzer.
[FIG. 2A] FIG. 2A is a diagram showing a main part of a sample dispensing device.
[FIG. 2B] FIG. 2B is a diagram showing a configuration example of a liquid surface sensing circuit.
[FIG. 3] FIG. 3 is a diagram showing a temporal change in an output voltage of a signal amplifier when a dispensing probe is lowered and raised.
[FIG. 4] FIG. 4 is a diagram showing a main part of a reagent dispensing device.
[FIG. 5] FIG. 5 is a flowchart showing a processing procedure of sample dispensing processing.
[FIG. 6] FIG. 6 shows a configuration example of a threshold setting table.
[FIG. 7] FIG. 7 shows a configuration example of a threshold setting table.
[FIG. 8] FIG. 8 is a flowchart showing a processing procedure (modification) of the sample dispensing processing.

### Description of Embodiments

Hereinafter, an embodiment will be described with reference to the drawings by taking an automatic analyzer including a dispensing device that dispenses a sample such as blood and urine or a reagent as an example. The invention is not limited to the embodiment. In the drawings, the same components are denoted by the same reference signs.

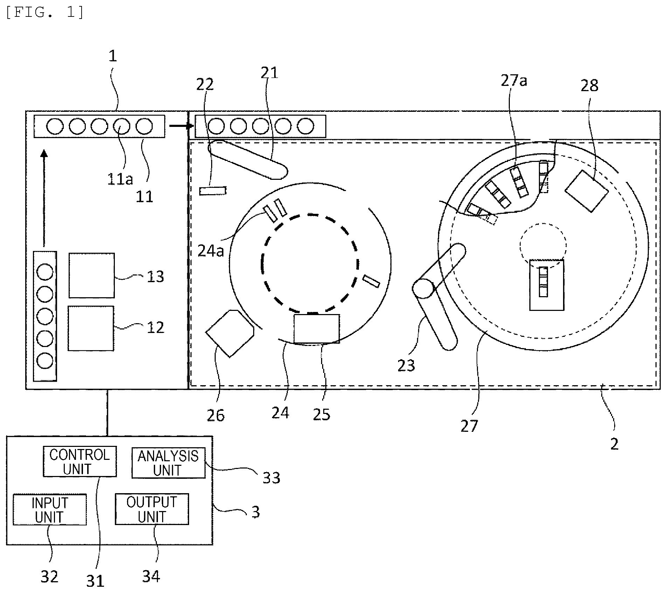

FIG. 1 is a schematic diagram showing a configuration of an automatic analyzer of the present embodiment. The automatic analyzer includes a sample transfer mechanism 1 that loads a sample as an analysis target into the device, a measurement mechanism 2 that separately dispenses a sample and a reagent into a cuvette 24a and optically measures a reaction occurring in the cuvette 24a to which the sample and the reagent are dispensed, and a control mechanism 3 that controls the entire automatic analyzer and analyzes a measurement result in the measurement mechanism 2. The biochemical analysis of a plurality of samples is automatically performed by cooperation of these mechanisms.

First, the sample transfer mechanism 1 will be described. A liquid sample such as blood and urine is accommodated in a sample container 11a, and a plurality of sample containers 11a are mounted on a sample rack 11 and loaded into the device. The sample rack 11 is transported in an arrow direction in the figure by the sample transfer mechanism 1, and is sequentially transferred toward the measurement mechanism 2. The sample transfer mechanism 1 includes a sample information reading device 12 that reads information from an information storage medium attached to the sample container 11a. As the information storage medium, for example, a barcode or an RFID tag can be used. The sample information reading device 12 reads information such as sample information and a type of the sample container 11a from the information storage medium, and outputs the information to a control unit 31. The sample transfer mechanism 1 includes a liquid surface height detection device 13 that detects a liquid surface height of the sample accommodated in the sample container 11a. The liquid surface height detection device 13 detects the liquid surface height of the sample accommodated in the sample container 11a and outputs the liquid surface to the control unit 31. The liquid surface height detection device 13 can detect the liquid surface height of the sample accommodated in the sample container 11a by emitting infrared light or visible light to the sample container 11a to be transferred and detecting a change in reflected light or a change in refractive index of light transmitted through the sample. A method for detecting the liquid surface height is not limited to the above-described method. An image of the sample container 11a was captured, and the liquid surface height of the sample accommodated in the sample container 11a may be acquired from the captured image of the sample container 11a. In this case, the type of the sample container 11a can also be specified from the image information of the sample container 11a.

Next, the measurement mechanism 2 will be described. The measurement mechanism 2 mainly includes a sample dispensing device 21, a reaction table 24, a reagent storage 27, a reagent dispensing device 23, a stirring unit 25, a photometry unit 26, and a washing unit 22.

The sample dispensing device 21 dispenses the sample in the sample container 11a into the cuvette 24a arranged on the reaction table 24. The reaction table 24 can be rotated around a vertical line, passing through a center of the reaction table 24, as a rotation axis by being driven by a drive mechanism (not shown) under the control of the control unit 31, and the cuvette 24a can be transferred to a predetermined position for dispensing, stirring, photometry, and the like of the sample and the reagent.

The reagent storage 27 houses a plurality of reagent containers 27a accommodating reagents to be dispensed into the cuvettes 24a. The reagent container 27a is detachably housed in the reagent storage 27. The reagent storage 27 can be rotated clockwise or counterclockwise around a vertical line, passing through a center of the reagent storage 27, as a rotation axis by being driven by a drive mechanism (not shown) under the control of the control unit 31, and a desired reagent container 27a is transferred to a reagent aspiration position of the reagent dispensing device 23. An openable and closable lid (not shown) is provided above the reagent storage 27. The reagent storage 27 has a cooling function. The reagent storage 27 cools the reagent stored in the reagent container 27a to prevent evaporation and denaturation of the reagent when the reagent container 27a is housed therein, and the lid is closed.

An information storage medium in which reagent information on the reagent accommodated in the reagent container 27a is recorded is attached to a side surface of the reagent container 27a. For example, the information storage medium stores reagent information such as an analysis item for which a reagent is used, a name of a reagent, and lot information, reagent container information, and the like. As the information storage medium, for example, a barcode or an RFID tag can be used. The reagent storage 27 is provided with a reagent information reading device 28 that reads the information storage medium attached to the reagent container 27a. The reagent information reading device 28 reads the reagent information and the type of the reagent container 27a accommodating the reagent from the information storage medium, and outputs them to the control unit 31. The reagent information reading device 28 outputs the information in the information storage medium, which has been read, to the control unit 31 in association with the position of the reagent container 27a, to which the information storage medium is attached, in the reagent storage 27.

The stirring unit 25 stirs the sample and the reagent dispensed into the cuvette 24a to promote the reaction. The photometry unit 26 emits analysis light to the cuvette 24a from a light source, disperses the light transmitted or scattered through the liquid in the cuvette 24a, and measures the intensity of each wavelength light by a light receiving element, to measure absorbance at a wavelength specific to the reaction liquid containing the sample and the reagent as an analysis target.

The washing unit 22 aspirates and discharges a mixed liquid in the cuvette 24a for which the measurement performed by the photometry unit 26 has been ended, and washes the cuvette 24a for which the analysis processing has been ended by injecting and aspirating a cleaning liquid such as a detergent or a cleaning water by a washing nozzle.

Next, the control mechanism 3 will be described. The control mechanism 3 includes the control unit 31, an input unit 32, an analysis unit 33, and an output unit 34. The control mechanism 3 is implemented by an information processing device such as a personal computer (PC).

The control unit 31 controls the entire automatic analyzer. The input unit 32 includes input devices such as a keyboard and a mouse, and acquires various types of information necessary for analysis of a sample, instruction information of an analysis operation, and the like from the outside. The user can input sample information, reagent information, container information, a probe type, and the like from the input unit 32. The analysis unit 33 performs component analysis and the like of the sample based on the absorbance measured by the photometry unit 26. The output unit 34 includes an output device such as a display, a printer, or a speaker, and outputs various types of information including the analysis result of the sample. The output unit 34 can also output various types of information to an external device via a communication network (not shown).

In the automatic analyzer configured as described above, after the sample dispensing device 21 dispenses the sample in the sample container 11a to a respective one of the plurality of cuvettes 24a arranged on the reaction table 24, and the reagent dispensing device 23 dispenses the reagent in the reagent container 27a to the respective one thereof, the photometry unit 26 performs a spectral intensity measurement on the mixed liquid obtained by causing a reaction of the sample and the reagent, and the analysis unit 33 analyzes the measurement result, so that component analysis of the sample is automatically performed. The cuvette 24a can be reused when the washing unit 22 washes the cuvette 24a for which the measurement has been ended, and a series of analysis operations are continuously and repeatedly performed.

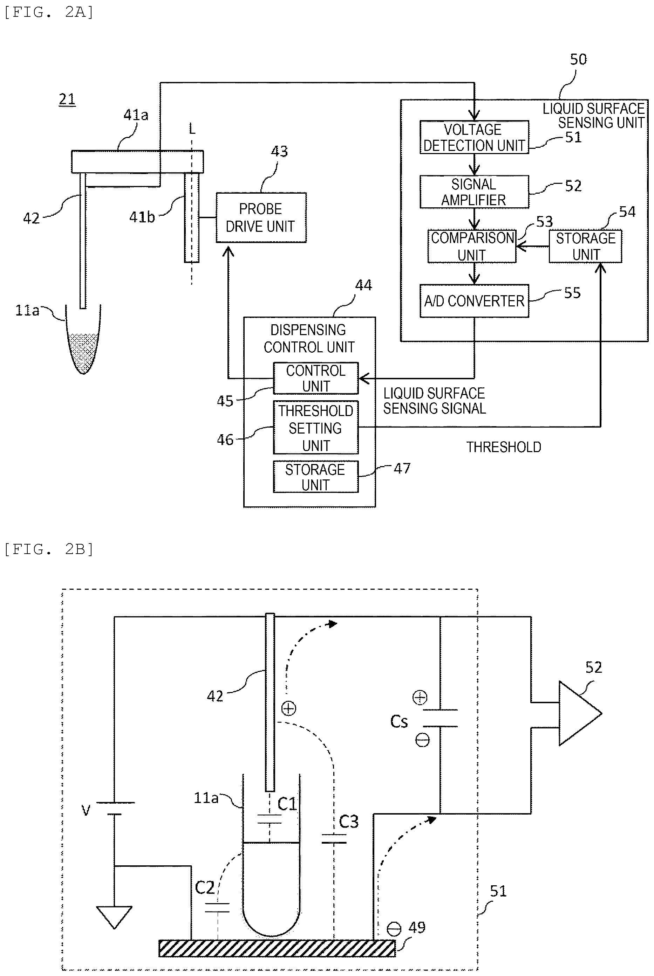

As shown in FIG. 2A, the sample dispensing device 21 includes a dispensing probe 42 made of a conductive metal material, the dispensing probe 42 is supported by an arm 41a, and the arm 41a is supported by a support column 41b. The probe drive unit 43 moves the support column 41b up and down in the vertical direction and rotates the arm 41a around a vertical line L, passing through a coupling portion between the arm 41a and the support column 41b, as a central axis, to insert the dispensing probe 42 into the sample container 11a in which the sample is accommodated.

The operation of the sample dispensing device 21 is controlled by a dispensing control unit 44. The operation of the dispensing device can be roughly divided into driving of a probe and aspiration and discharge of a liquid such as a sample, and in FIG. 2A, components related to the driving of the probe are extracted and shown. The dispensing control unit 44 is implemented by a control board or a microcomputer including a CPU, a RAM, and a ROM, and includes a control unit 45, a threshold setting unit 46, and a storage unit 47. A liquid surface sensing unit 50 is a circuit board that outputs a liquid surface sensing signal when a tip end of the dispensing probe 42 is in contact with the sample in the sample container 11a.

An operation when the sample dispensing device 21 dispenses the sample in the sample container 11a will be described. The control unit 45 of the dispensing control unit 44 positions the dispensing probe 42 above the sample container 11a by rotating the arm 41a by controlling the probe drive unit 43. Thereafter, the control unit 45 lowers dispensing probe 42 toward the sample container 11a by lowering the support column 41b by controlling the probe drive unit 43. When the tip end of the dispensing probe 42 is inserted into the sample in the sample container 11a, the liquid surface sensing unit 50 outputs a liquid surface sensing signal to the control unit 45. The control unit 45 receives the liquid surface sensing signal to stop the lowering of the dispensing probe 42 and shift to the aspiration operation of the sample.

A configuration example of a liquid surface sensing circuit in the liquid surface sensing unit 50 will be described with reference to FIG. 2B. A voltage detection unit 51 of the liquid surface sensing unit 50 includes a power supply V, a capacitor Cs connected in parallel to the power supply V, and an electrostatic capacity component C formed between the dispensing probe 42 and a sample stage 49. The electrostatic capacity component C is a combined capacity of an electrostatic capacity C1 between the dispensing probe 42 and the sample, an electrostatic capacity C2 between the sample and the sample stage 49, and an electrostatic capacity C3 between the dispensing probe 42 and the sample stage 49. The electrostatic capacities C1 and C3 change when the dispensing probe 42 moves up and down, and the electrostatic capacity C1 becomes 0 when the dispensing probe 42 comes into contact with the sample. Such a change in the electrostatic capacity component C can be detected as a voltage of the capacitor Cs. Therefore, a signal amplifier 52 amplifies a voltage between electrodes of the capacitor Cs and outputs the amplified voltage, compares the amplified voltage with a threshold for determining the liquid surface sensing, which is stored in a storage unit 54, in a comparison unit 53, binarizes a comparison result obtained by the comparison unit 53 by an A/D converter 55, and outputs the binarized comparison result as a liquid surface sensing signal.

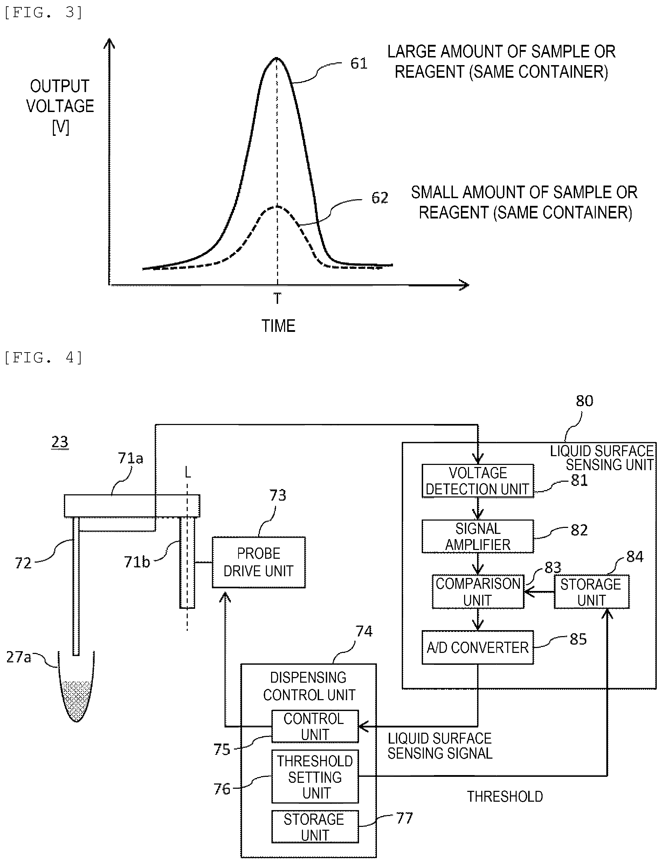

FIG. 3 is a diagram schematically showing a relationship between time and an output voltage from the signal amplifier 52 when the dispensing probe 42 of the sample dispensing device 21 shown in FIG. 2A is lowered and is brought into contact with the sample and then raised. As shown in FIG. **3****,** the voltage output from the signal amplifier 52 increases as the dispensing probe 42 is lowered and approaches the sample accommodated in the sample container 11a. The voltage output from the signal amplifier 52 decreases again as the dispensing probe 42 comes into contact with the liquid surface, starts to rise, and separates from the liquid surface. As described above, the output voltage of the signal amplifier 52 monotonically increases until the dispensing probe 42 comes into contact with the liquid surface, and therefore, it can be determined that the dispensing probe 42 comes into contact with the liquid surface when the output voltage of the signal amplifier 52 exceeds a predetermined threshold.

However, a waveform of the output voltage of the signal amplifier 52 varies depending on the type of the sample container 11a accommodating the sample, the shape of the sample container 11a, and the sample in the sample container 11a. In particular, the waveform greatly varies depending on the sample amount. Waveforms 61, 62 shown in FIG. 3 are examples in which the same sample is accommodated in the same container, and the waveform 61 is a signal waveform when the sample amount is large, and a waveform 62 is a signal waveform when the sample amount is small. Therefore, in the present embodiment, the threshold setting unit 46 of the dispensing control unit 44 sets a threshold for determining liquid surface sensing each time dispensing is performed by the sample dispensing device 21, and the comparison unit 53 of the liquid surface sensing unit 50 determines liquid surface sensing based on the threshold.

FIG. 4 shows a configuration example of the reagent dispensing device 23. The reagent dispensing device 23 is configured in the same manner as the sample dispensing device 21 shown in FIG. 2A, and therefore, redundant description will be omitted. In the case of the reagent dispensing device 23, the signal waveform of the output voltage of the signal amplifier 82 also changes depending on an amount of the reagent accommodated in the reagent container 27a. Therefore, in the present embodiment, a threshold setting unit 76 of a dispensing control unit 74 sets a threshold for determining liquid surface sensing each time dispensing is performed by the reagent dispensing device 23, and a comparison unit 83 of a liquid surface sensing unit 80 determines liquid surface sensing based on the threshold.

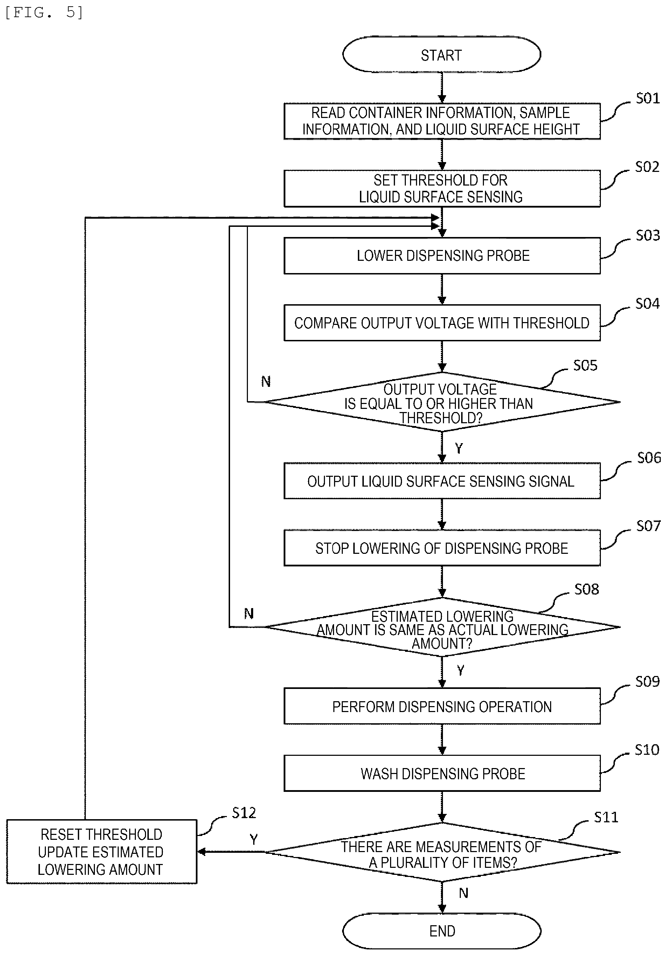

Next, sample dispensing processing in the sample dispensing device 21 will be described. FIG. 5 is a flowchart showing a processing procedure of sample dispensing processing in the sample dispensing device 21 shown in FIG. 2A. The sample information reading device 12 reads the sample information and the container information from the information storage medium attached to the sample container 11a accommodating the sample to be dispensed, and the liquid surface height detection device 13 reads the height of the liquid surface of the sample. The reading of the container information may be performed by the liquid surface height detection device 13. These pieces of information are transferred to the dispensing control unit 44 of the sample dispensing device 21 via the control unit 31 of the control mechanism 3 (S01). An example in which these pieces of information are automatically read by the automatic analyzer has been described here, and the user may input these pieces of information from the input unit 32 of the control mechanism 3. Subsequently, the threshold setting unit 46 of the dispensing control unit 44 sets a threshold for liquid surface determination based on the information read in step S01 and a threshold setting table stored in the storage unit 47. The set threshold is stored in the storage unit 54 of the liquid surface sensing unit 50 (S02).

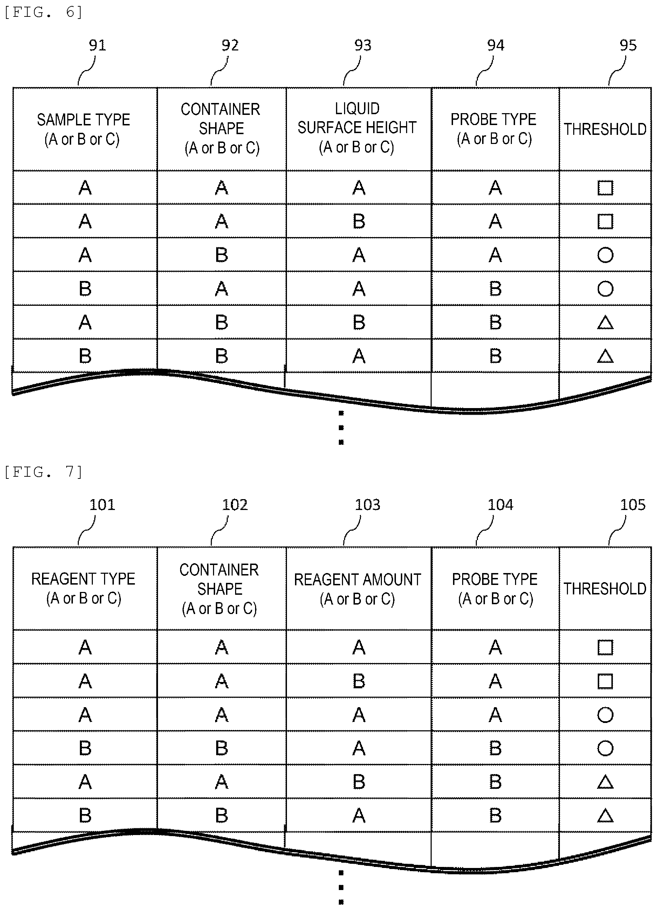

FIG. 6 shows a configuration example of the threshold setting table. In the example of FIG. 6, the threshold can be set according to a combination of factors affecting the threshold for liquid surface determination. Here, examples of factors include a sample type 91, a container shape 92, a liquid surface height 93, and a probe type 94, and a threshold 95 is determined by a combination thereof. In step S02, a corresponding record in the threshold setting table is selected from the information read in step S01, and the threshold is set.

The sample type 91 of the sample is roughly classified into, for example, plasma, whole blood, and urine. The container shape 92 may be classified based on a feature that affects the signal waveform of the output voltage of the signal amplifier 82. For example, the container shape can be classified according to the height of the container. An example in which the liquid surface height 93 is classified into several ranges is shown. Instead of the liquid surface height, the sample amount calculated according to the container shape and the liquid surface height may be associated with the threshold. The probe type 94 is classified because the degree of exposure of a metal portion of the dispensing probe serving as the electrode of the electrostatic capacity component C and a diameter of the dispensing probe affect the signal waveform of the output voltage of the signal amplifier 82. The threshold with higher accuracy can be set by setting the threshold based on the sample type, the container shape, and the probe type in addition to the liquid surface height or the sample amount. Note that it is not necessary to set the threshold based on all of these factors, and the threshold may be set in consideration of other factors. In addition, an example in which the threshold is set using the table has been described here, and the threshold may be set by a calculation formula having these factors as variables.

Subsequently, the control unit 45 of the dispensing control unit 44 controls the probe drive unit 43 to lower the dispensing probe 42 into the sample container 11a (S03). While the dispensing probe 42 is being lowered, the comparison unit 53 compares the output voltage of the signal amplifier 52 with the threshold set in the storage unit 54 in the liquid surface sensing unit 50(S04). If the output voltage is less than the threshold (S05: No), the dispensing probe 42 is continuously lowered and the liquid surface determination is continued (S03 to S05). On the other hand, if the output voltage is equal to or higher than the threshold, the A/D converter 55 outputs a digital liquid surface sensing signal to the dispensing control unit 44 (S06). The control unit 45 of the dispensing control unit 44 receives the liquid surface sensing signal and performs control to stop the lowering of the dispensing probe 42 performed by the probe drive unit 43 (S07).

Here, the liquid surface sensing based on the electrostatic capacity may be erroneous sensing due to static electricity from the outside or mixing of bubbles into the sample. Therefore, it is desirable to add step S08 for verifying whether the actual lowering amount is appropriate based on the liquid surface height information.

The control unit 45 of the dispensing control unit 44 estimates a required lowering amount of the dispensing probe 42 (hereinafter, referred to as a required lowering amount) from the liquid surface height information acquired in step S01. Further, the control unit 45 calculates an actual lowering amount of the dispensing probe 42 from the start of the lowering of the dispensing probe 42 in step S03 to the stop of the lowering of the dispensing probe 42 in step S07. For example, a distance by which the dispensing probe 42 is actually lowered can be calculated based on the number of pulses applied to a pulse motor of the probe drive unit 43. The actual lowering amount of the dispensing probe 42 is stored in the storage unit 47.

The control unit 45 of the dispensing control unit 44 compares the required lowering amount estimated from the liquid surface height information with the actual lowering amount, and determines that the liquid surface is appropriately sensed when the required lowering amount and the actual lowering amount are the same or an error is within an allowable range. In contrast, if the error exceeds the allowable range, for example, the processing returns to step S03, and the lowering of the dispensing probe is executed again.

Thereafter, the control unit 45 executes a dispensing operation, such as aspiration from the sample container 11a and discharge to the cuvette 24a, for the sample (S09), and washes the dispensing probe 42 in a washing tank (not shown) (S10) .

Thereafter, the control unit 31 of the control mechanism 3 checks whether there are measurements of a plurality of items for the sample (S11). If there are measurements of a plurality of items (S11: Yes), the threshold setting unit 46 calculates an amount of the sample in the sample container 11a based on a sample amount before dispensing and a dispensing amount, and resets the threshold (S12). Further, if the liquid surface erroneous sensing and detection based on the lowering amount (S08) is performed, the required lowering amount is updated based on the liquid surface height information acquired in step S01 or the actual lowering amount and the dispensing amount stored in the storage unit 47. Thereafter, the dispensing processing is started again. If there are no measurements of a plurality of items (S11: No), the dispensing processing of the sample is ended.

FIG. 5 illustrates the sample dispensing processing performed by the sample dispensing device 21 as an example, and the same applies to the reagent dispensing processing by the reagent dispensing device 23. Description of redundant contents will be omitted, and only differences will be described. In step S01, information required for setting the threshold is calculated based on the reagent information read by the reagent information reading device 28 or input by the user and registered in the device. The threshold for liquid surface sensing of the reagent can also be set based on a threshold setting table stored in a storage unit 77 of the dispensing control unit 74.

FIG. 7 shows a configuration example of a threshold setting table for the reagent dispensing device 23. The threshold setting table for the reagent dispensing device 23 is also the same as the threshold setting table for the sample dispensing device 21. However, when the container shape is generally determined according to the reagent, the container shape information may also be unnecessary. A reagent amount 103 is included as information required for setting the threshold, and the reagent amount is acquired from the control unit 31 of the control mechanism 3 in step S01. The control unit 31 stores a reagent dispensing amount after the reagent container 27a is stored in the reagent storage 27 and used. The amount of the reagent stored in the reagent container 27a or the liquid surface height of the reagent can be calculated using this information.

In the present embodiment, the liquid surface height detection device 13 is provided, and the liquid surface detection accuracy of the sample can be improved by setting the threshold of the liquid surface determination based on the liquid surface height read for the sample container 11a loaded into the device. In particular, when an amount of the sample accommodated in the sample container 11a is small, there is a high possibility that a liquid surface detection error occurs when the threshold is set on the assumption that the maximum amount of the sample is accommodated in the sample container 11a. Further, when dispensing is performed a plurality of times or inspection of a plurality of items is performed, the thresholds for the second and subsequent time can be accurately set by obtaining the thresholds for the second and subsequent time based on the liquid amount using the first liquid surface sensing result.

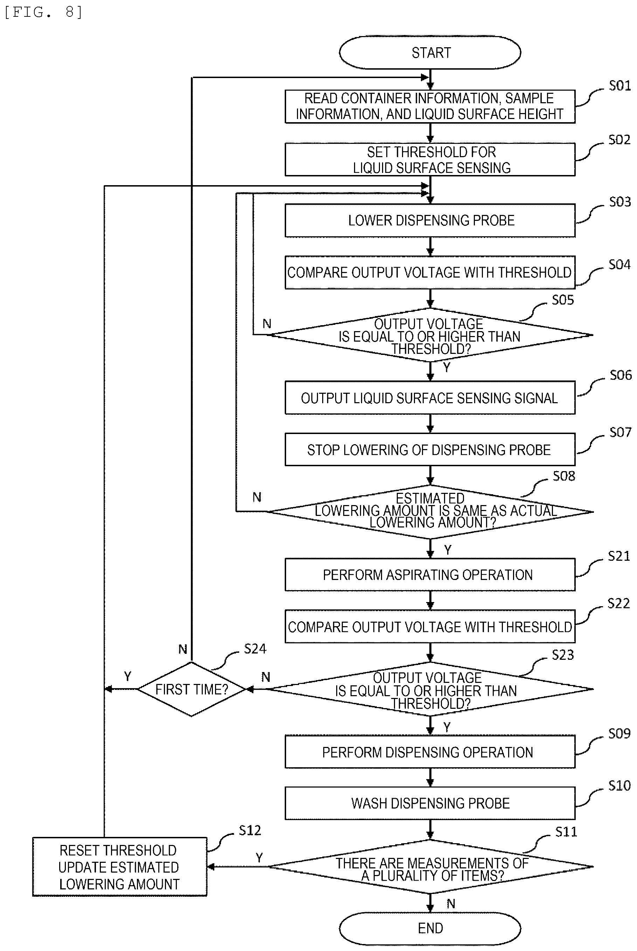

FIG. 8 is a flowchart showing a modification of the sample dispensing processing in the sample dispensing device 21. The difference from the flowchart shown in FIG. 5 lies in that it is determined whether the sample can be aspirated based on the output voltage of the signal amplifier 52 after the sample aspiration operation is performed. Differences from the flowchart of FIG. 5 will be mainly described.

If the estimated lowering amount and the actual lowering amount are equal to each other (S08: Yes), the sample dispensing device 21 starts a dispensing operation and first executes an aspiration operation (S21). During the aspiration operation of the dispensing probe 42, in the liquid surface sensing unit 50, the comparison unit 53 compares the output voltage of the signal amplifier 52 with the threshold set in the storage unit 54 (S22). If the output voltage is equal to or higher than the threshold, the sample dispensing device 21 continues to receive the liquid surface sensing signal and continues the dispensing operation (S09). An insertion amount of the tip end of the dispensing probe 42 is set such that the tip end is in contact with the liquid surface even when the aspiration of the sample has been ended in order to prevent mixing of air, and therefore, the fact that the output voltage of the signal amplifier 52 is equal to or higher than the threshold during the aspiration operation indicates that the sample can be normally aspirated.

In contrast, for example, when the aspiration operation is started by erroneously sensing bubbles formed on a sample surface as the liquid surface, the tip end of the dispensing probe 42 is separated from the liquid surface, for example, during the aspiration operation. In this case, the output voltage of the signal amplifier 52 is less than the threshold (S23: No), which indicates that the aspiration operation is not normally performed.

Therefore, if it is determined that the sample cannot be normally aspirated in the first dispensing operation from the sample container 11a (S24: Yes), the processing returns to step S03, and the operation is performed again from the operation of lowering the dispensing probe 42 to the sample container 11a. For example, when the cause of the aspiration operation is bubbles on the sample surface, there is a high possibility that aspiration can be correctly performed in the aspiration operation again. On the other hand, if it is determined again in step S23 that the sample cannot be normally aspirated (S24: No), there is a high possibility that the threshold used for liquid surface sensing is not appropriate. Therefore, the sample rack 11 holding the sample container 11a is returned to the sample transfer mechanism 1, the liquid surface height of the sample is read again by the liquid surface height detection device 13 (S01), and the threshold is reset (S02). In this case, reading of information by the sample information reading device 12 can be omitted.

The flowchart of FIG. 8 shows the sample dispensing processing, and the same processing can be also applied to the reagent dispensing processing by the reagent dispensing device 23.

The invention is not limited to the above embodiments, and includes various modifications. For example, the above embodiments have been described in detail in order to facilitate understanding of the invention, and is not necessarily limited to those including all the configurations described above. In addition, a part of a configuration according to a certain embodiment can be replaced with a configuration according to another embodiment, and a configuration according to another embodiment can be added to a configuration according to a certain embodiment. In addition, another configuration can be added to, deleted from, or replaced with a part of a configuration of each embodiment.

### Reference Signs List

1: sample transfer mechanism
2: measurement mechanism
3: control mechanism
11: sample rack
11a: sample container
12: sample information reading device
13: liquid surface height detection device
21: sample dispensing device
22: washing unit
23: reagent dispensing device
24: reaction table
24a: cuvette
25: stirring unit
26: photometry unit
27: reagent storage
27a: reagent container
28: reagent information reading device
31: control unit
32: input unit
33: analysis unit
34: output unit
41a, 71a: arm
41b, 71b: support column
42, 72: dispensing probe
43, 73: probe drive unit
44, 74: dispensing control unit
45, 75: control unit
46, 76: threshold setting unit
47, 77: storage unit
49: sample stage
50, 80: liquid surface sensing unit
51, 81: voltage detection unit
52, 82: signal amplifier
53, 83: comparison unit
54, 84: storage unit
55, 85: A/D converter
61, 62: waveform
91: sample type
92, 102: container shape
93: liquid surface height
94, 104: probe type
95, 105: threshold

## Claims

1. An automatic analyzer comprising:
a liquid surface height detection device configured to detect a liquid surface height of a sample accommodated in a sample container;
a dispensing device configured to dispense, by a dispensing probe, the sample accommodated in the sample container;
a liquid surface sensing unit configured to output, based on a change in an electrostatic capacity between the dispensing probe and the sample accommodated in the sample container, a liquid surface sensing signal indicating that the dispensing probe is in contact with the sample; and
a dispensing control unit configured to control an operation of the dispensing device, wherein
the dispensing control unit causes the dispensing device to lower the dispensing probe toward the sample container and to stop the lowering of the dispensing probe when receiving the liquid surface sensing signal from the liquid surface sensing unit,
the liquid surface sensing unit includes a liquid surface sensing circuit whose output voltage changes depending on the electrostatic capacity between the dispensing probe and the sample accommodated in the sample container, and generates the liquid surface sensing signal by comparing the output voltage of the liquid surface sensing circuit with a threshold, and
the dispensing control unit sets the threshold based on at least the liquid surface height of the sample accommodated in the sample container detected by the liquid surface height detection device.

2. The automatic analyzer according to claim 1, further comprising:
a sample information reading device configured to read information on the sample container and/or the sample accommodated in the sample container from an information recording medium attached to the sample container, wherein
the dispensing control unit sets the threshold based on a combination of the liquid surface height of the sample accommodated in the sample container and the information on the sample container and/or the sample accommodated in the sample container, which is read by the sample information reading device.

3. The automatic analyzer according to claim 2, wherein
the dispensing control unit sets the threshold based on a combination of a shape of the sample container, a type of the sample accommodated in the sample container, a liquid surface height of the sample accommodated in the sample container, and a type of the dispensing probe.

4. The automatic analyzer according to claim 1, wherein
the dispensing control unit compares a required lowering amount of the dispensing probe estimated based on the liquid surface height of the sample accommodated in the sample container detected by the liquid surface height detection device with an actual lowering amount of the dispensing probe stopped when receiving the liquid surface sensing signal, and causes the dispensing device to lower the dispensing probe toward the sample container again when an error between the required lowering amount and the actual lowering amount exceeds an allowable range.

5. The automatic analyzer according to claim 1, wherein
when dispensing the sample from the sample container a plurality of times, the dispensing control unit resets the threshold based on the liquid surface height of the sample accommodated in the sample container detected by the liquid surface height detection device and a liquid surface height of the sample accommodated in the sample container calculated based on an amount of the sample already dispensed.

6. The automatic analyzer according to claim **5,** wherein
the dispensing control unit compares a required lowering amount of the dispensing probe estimated based on the liquid surface height of the sample accommodated in the sample container with an actual lowering amount of the dispensing probe stopped when receiving the liquid surface sensing signal, and causes the dispensing device to lower the dispensing probe toward the sample container again when an error between the required lowering amount and the actual lowering amount exceeds an allowable range, and
when dispensing the sample from the sample container a plurality of times, the dispensing control unit updates the required lowering amount based on the liquid surface height of the sample accommodated in the sample container detected by the liquid surface height detection device or the liquid surface height of the sample accommodated in the sample container calculated based on the actual lowering amount and the amount of the sample already dispensed.

7. The automatic analyzer according to claim 1, wherein
when the dispensing device aspirates the sample accommodated in the sample container,
the liquid surface sensing unit generates the liquid surface sensing signal by comparing the output voltage of the liquid surface sensing circuit with the threshold, and
the dispensing control unit causes the dispensing device to lower the dispensing probe toward the sample container again when the liquid surface sensing signal is not received and the aspiration from the sample container is performed for a first time.

8. The automatic analyzer according to claim 7, wherein
when the liquid surface sensing unit does not generate the liquid surface sensing signal and the aspiration from the sample container is performed for a second or subsequent time, the liquid surface height detection device detects the liquid surface height of the sample accommodated in the sample container again.

9. A sample dispensing method performed by an automatic analyzer including a liquid surface height detection device configured to detect a liquid surface height of a sample accommodated in a sample container, a dispensing device configured to dispense, by a dispensing probe, the sample accommodated in the sample container, a liquid surface sensing unit configured to output, based on a change in an electrostatic capacity between the dispensing probe and the sample accommodated in the sample container, a liquid surface sensing signal indicating that the dispensing probe is in contact with the sample, and a dispensing control unit configured to control an operation of the dispensing device, the sample dispensing method comprising:
providing the liquid surface sensing unit with a liquid surface sensing circuit whose output voltage changes depending on the electrostatic capacity between the dispensing probe and the sample accommodated in the sample container;
causing, by the dispensing control unit, the dispensing device to lower the dispensing probe toward the sample container;
generating, by the liquid surface sensing unit, the liquid surface sensing signal by comparing the output voltage of the liquid surface sensing circuit with a threshold;
stopping, by the dispensing control unit, the lowering of the dispensing probe when receiving the liquid surface sensing signal from the liquid surface sensing unit; and
setting, by the dispensing control unit, the threshold based on at least the liquid surface height of the sample accommodated in the sample container detected by the liquid surface height detection device.

10. The sample dispensing method according to claim **9,** wherein
when dispensing the sample from the sample container a plurality of times, the dispensing control unit resets the threshold based on the liquid surface height of the sample accommodated in the sample container detected by the liquid surface height detection device and a liquid surface height of the sample accommodated in the sample container calculated based on an amount of the sample already dispensed.

11. The sample dispensing method according to claim 10, wherein
the dispensing control unit compares a required lowering amount of the dispensing probe estimated based on the liquid surface height of the sample accommodated in the sample container with an actual lowering amount of the dispensing probe stopped when receiving the liquid surface sensing signal, and causes the dispensing device to lower the dispensing probe toward the sample container again when an error between the required lowering amount and the actual lowering amount exceeds an allowable range, and
when dispensing the sample from the sample container a plurality of times, the dispensing control unit updates the required lowering amount based on the liquid surface height of the sample accommodated in the sample container detected by the liquid surface height detection device or the liquid surface height of the sample accommodated in the sample container calculated based on the actual lowering amount and the amount of the sample already dispensed.

12. The sample dispensing method according to claim 9, wherein
when the dispensing device aspirates the sample accommodated in the sample container,
the liquid surface sensing unit generates the liquid surface sensing signal by comparing the output voltage of the liquid surface sensing circuit with the threshold, and
the dispensing control unit causes the dispensing device to lower the dispensing probe toward the sample container again when the liquid surface sensing signal is not received and the aspiration from the sample container is performed for a first time.

13. The sample dispensing method according to claim 12, wherein
when the liquid surface sensing unit does not generate the liquid surface sensing signal and the aspiration from the sample container is performed for a second or subsequent time, the liquid surface height detection device detects the liquid surface height of the sample accommodated in the sample container again.
